(19) Europäisches Patentamt
European Patent Office
Office européen des brevets

(11) EP 4 474 405 A1

# (12) EUROPEAN PATENT APPLICATION

(43) Date of publication:
**11.12.2024 Bulletin 2024/50**

(21) Application number: **24173069.6**

(22) Date of filing: **29.04.2024**

(51) International Patent Classification (IPC):
***C08G 65/26*** *(2006.01)* ***C08G 65/325*** *(2006.01)*
***C11D 1/72*** *(2006.01)*

(52) Cooperative Patent Classification (CPC):
**C08G 65/2609; C08G 65/2624; C08G 65/3255; C11D 3/30;** C08G 2650/50

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.06.2023 CN 202310681358**

(71) Applicants:
- **Zhejiang Huangma Technology Co., Ltd.**
  **Shaoxing Zhejiang 312000 (CN)**
- **Zhejiang Lukean Chemical Co., Ltd.**
  **Shaoxing Zhejiang 312000 (CN)**
- **Zhejiang Huangma Chemical New Polymer Material Co., Ltd**
  **Shaoxing Zhejiang 312000 (CN)**
- **Zhejiang Huangma Shangyi New Material Co., Ltd.**
  **Shaoxing Zhejiang 312000 (CN)**

(72) Inventors:
- **WANG, Weisong**
  **Shaoxing, 312000 (CN)**
- **JIN, Yifeng**
  **Shaoxing, 312000 (CN)**
- **YU, Jiang**
  **Shaoxing, 312000 (CN)**
- **ZHAO, Shicong**
  **Shaoxing, 312000 (CN)**
- **WANG, Majishi**
  **Shaoxing, 312000 (CN)**

(74) Representative: **Zaboliene, Reda**
**Metida**
**Business center Vertas**
**Gyneju str. 16**
**01109 Vilnius (LT)**

## (54) FATTY ALCOHOL POLYETHER AMINE POLYETHER AND PREPARATION METHOD AND APPLICATION THEREOF

(57) The disclosure belongs to the technical field of organic macromolecule compound preparation, and discloses a fatty alcohol polyether amine polyether and a preparation method and application thereof. The method includes: using a fatty alcohol as an initiator, and adding a first epoxy compound for a polymerization reaction to obtain a fatty alcohol polyether; then, taking a hydroamination reaction between the fatty alcohol polyether and liquid ammonia to obtain a fatty alcohol polyether amine; and finally, taking a polymerization reaction between the fatty alcohol polyether amine and a second epoxy compound to obtain the fatty alcohol polyether amine polyether. The fatty alcohol polyether amine polyether prepared by the disclosure has the advantages of safety, nontoxicity, no skin stimulation, biodegradability, high compatibility, green and environmental-friendly effects, etc., and can be used for preparing quaternary ammonium salt intermediate products and various industrial solvents.

EP 4 474 405 A1

## Description

### Technical Field

The disclosure belongs to the technical field of organic macromolecule compound preparation, and particularly relates to a fatty alcohol polyether amine polyether and a preparation method and application thereof.

### Background

Surfactants have fixed hydrophilic and oleophilic groups which are directionally arranged on the surface of a solution and are capable of obviously reducing the surface tension, so they have a special status in industry. At present, the surfactants have been widely applied to various fields in life and production, achieve the effects of greatly improving the production efficiency and promoting the economic development, and bring great convenience to people's life. However, with mass use of the surfactants, the harm to human bodies and ecological environment pollution becomes increasing. With the continuous improvement of people's life quality and the continuous improvement of requirements on the ecological environment, "green chemistry" has become the focus of attention, and the development of environmental-friendly green surfactants has become an irresistible trend.

A polyether amine is one of two major raw materials for synthesizing polyurethane materials, has the largest consumption in the polyurethane industry, and has great market potentials. With the gradual depletion of petrochemical industry energy, traditional polyether amines such as ethylene glycol polyether amines, methanol polyether amines and trimethylolpropane polyether amines face the problem of raw material shortage, and at the same time, they cause environment pollution in the production and use process, so it hinders the sustainable development of the polyether amine industry. Therefore, it is very important to replace petroleum resources with environmental-friendly renewable resources.

A fatty alcohol polyether amine maintains the excellent performance of a traditional surfactant, and has the special advantages of natural effect, mildness, resource renewability, easy biodegradability, etc. Due to its characteristics of rich foam, strong dirt-removing power, emulsifying ability, high solubility and low skin stimulation, the fatty alcohol polyether amine is widely used for shampoo, foam bath preparations, cosmetics, household liquid detergents and industrial detergents such as glass detergents, wall detergents and automotive body detergents, and can also be used as surfactants and levelling agents in the printing and dyeing industry.

On the basis of remaining the advantages of the fatty alcohol polyether amine, a fatty alcohol polyether amine polyether also has many advantages which are not achieved by most fatty alcohol polyether amines. The fatty alcohol polyether amine polyether can be widely used as a sterilizing agent, a disinfector, a softening agent, an antistatic agent, a demulsifier, etc. to be applied to the fields of agriculture, medicine, rubber, textile printing and dyeing industries, etc., can also be used as drilling fluid to be applied to the petrochemical industry, and has good use prospects. However, although there are many methods for preparing a fatty alcohol polyether or a traditional polyether amine at present, there is no relevant document which introduces a preparation method of a fatty alcohol polyether amine polyether. Therefore, it is very necessary to prepare a novel green environmental-friendly fatty alcohol polyether amine polyether.

### Summary

In order to overcome the defects in the prior art, the disclosure is directed to provide a novel green environmental-friendly renewable fatty alcohol polyether amine polyether and a preparation method and application thereof. According to the preparation method, a natural fatty alcohol is used as a raw material, the prepared fatty alcohol polyether amine polyether remains the advantages of the fatty alcohol polyether amine, and additionally acquires water solubility and permeability. At the same time, a primary amine group at the end becomes tertiary amine, and the fatty alcohol polyether amine polyether may be used for preparing quaternary ammonium salt intermediate products. The fatty alcohol polyether amine polyether prepared by the method may be widely used as a sterilizing agent, a disinfector, a softening agent, an antistatic agent, a demulsifier, etc. to be applied to the fields of agriculture, medicine, rubber, textile printing and dyeing industries, etc.

The disclosure provides a preparation method of a fatty alcohol polyether amine polyether.

Specifically, the preparation method of a fatty alcohol polyether amine polyether includes the following steps: using a fatty alcohol as an initiator, and adding a first epoxy compound for a polymerization reaction to obtain a fatty alcohol polyether; then, taking a hydroamination reaction between the fatty alcohol polyether and liquid ammonia to obtain a fatty alcohol polyether amine; and finally, taking a polymerization reaction between the fatty alcohol polyether amine and a second epoxy compound to obtain the fatty alcohol polyether amine polyether.

Preferably, the first epoxy compound and the second epoxy compound are respectively and independently selected from at least one of ethylene oxide, propylene oxide, ethylene oxide/propylene oxide random copolymers, or

ethylene oxide/propylene oxide segmented copolymers.

Preferably, the first epoxy compound is propylene oxide, and the second epoxy compound is ethylene oxide.

Preferably, the fatty alcohol is a $C_{12}$-$C_{18}$ fatty alcohol.

More concretely, a preparation method of a fatty alcohol polyether amine polyether includes the following steps:

(1) using a $C_{12}$-$C_{18}$ fatty alcohol as an initiator, and adding the first epoxy compound to take a polymerization reaction at 135°C to 145°C under the effect of a first catalyst to obtain a fatty alcohol polyether;
(2) adding the fatty alcohol polyether obtained in step (1), liquid ammonia and hydrogen gas into a reaction kettle to take a hydroamination reaction at 160°C to 180°C under the effect of a second catalyst to obtain fatty alcohol polyether amine; and
(3) introducing the second epoxy compound into the fatty alcohol polyether amine obtained in step (2) to take a polymerization reaction at 155°C to 160°C under the effect of a third catalyst to obtain the fatty alcohol polyether amine polyether.

Preferably, in step (1), the $C_{12}$-$C_{18}$ fatty alcohol is at least one of $C_{12}$ laurinol, $C_{14}$ myristyl alcohol, $C_{16}$ palmityl alcohol or $C_{18}$ stearyl alcohol. Further preferably, the $C_{12}$-$C_{18}$ fatty alcohol is $C_{16}$ palmityl alcohol or $C_{18}$ stearyl alcohol.

Preferably, in step (1), a mole ratio of the $C_{12}$-$C_{18}$ fatty alcohol to the first epoxy compound is 1:3-1:6; further preferably, a mole ratio of the $C_{12}$-$C_{18}$ fatty alcohol to the first epoxy compound is 1:3-1:5; and more preferably, a mole ratio of the $C_{12}$-$C_{18}$ fatty alcohol to the first epoxy compound is 1:4.

Preferably, in step (1), the first catalyst is at least one of potassium hydroxide, sodium hydroxide or a double metal cyanide complex catalyst (DMC).

Preferably, if the double metal cyanide complex catalyst (DMC) is selected, an addition amount of the double metal cyanide complex catalyst is 5% to 10‰ of the total mass of the fatty alcohol and the first epoxy compound. Preferably, an addition amount of the double metal cyanide complex catalyst is 7% to 9‰ of the total mass of the fatty alcohol and the first epoxy compound.

Preferably, in step (2), a mole ratio of the fatty alcohol polyether to the liquid ammonia is 1:5-1:15; further preferably, a mole ratio of the fatty alcohol polyether to the liquid ammonia is 1:6-1:12; and more preferably, a mole ratio of the fatty alcohol polyether to the liquid ammonia is 1:8-1:12, for example, 1: 10.

Preferably, in step (2), a mole ratio of the fatty alcohol polyether to the hydrogen gas is 1:2-1:8; further preferably, a mole ratio of the fatty alcohol polyether to the hydrogen gas is 1:2-1:5; and more preferably, a mole ratio of the fatty alcohol polyether to the hydrogen gas is 1:3-1:5, for example, 1:4. In step (2), the hydrogen gas participates the last step of hydrogenation reaction during the amination reaction, and also achieves important effects of keeping the reducing state of the catalyst, inhibiting side reactions, keeping the activity of the catalyst, etc. in a reaction system.

Preferably, in step (2), the second catalyst is a palladium on charcoal catalyst.

Preferably, an addition amount of the palladium on charcoal catalyst is 10% to 20% of the mass of the fatty alcohol polyether. Further preferably, an addition amount of the palladium on charcoal catalyst is 12% to 18% of the mass of the fatty alcohol polyether, for example, 15%.

Preferably, in step (2), a temperature of the amination reaction is 170°C to 180°C, a pressure of the amination reaction is 8 Mpa to 13 Mpa, and a time of the amination reaction is 2 h to 6 h. Further preferably, a temperature of the amination reaction is 175°C to 180°C, a pressure of the amination reaction is 11 Mpa to 12 Mpa, and a time of the amination reaction is 1.5 h to 4.5 h.

Preferably, in step (3), a mole ratio of the fatty alcohol polyether amine to the second epoxy compound is 1:5-1:8. Further preferably, a mole ratio of the fatty alcohol polyether amine to the second epoxy compound is 1:5-1:6.

Preferably, in step (3), the third catalyst includes at least one of potassium hydroxide or sodium hydroxide. Further preferably, the third catalyst is potassium hydroxide.

Preferably, in step (3), an addition amount of the third catalyst is 5‰-15‰ of the total mass of the fatty alcohol polyether amine and the ethylene oxide. Further preferably, an addition amount of the third catalyst is 5‰-10‰ of the total mass of the fatty alcohol polyether amine and the ethylene oxide. More preferably, an addition amount of the third catalyst is 7‰-9‰ of the total mass of the fatty alcohol polyether amine and the ethylene oxide, for example, 8‰.

The disclosure further provides a fatty alcohol polyether amine polyether prepared by the preparation method of a fatty alcohol polyether amine polyether. A tertiary amine rate of the fatty alcohol polyether amine polyether is higher than 98.0%.

The disclosure further provides a surfactant, including the fatty alcohol polyether amine polyether.

It could be understood that in the above contents, the first, second and third are only used for distinguishing the technical features and cannot be understood as indicating or implying the relative importance or impliedly indicating the quantity of the technical features or impliedly indicating the precedence relationship of the indicated technical features.

Compared with the prior art, the disclosure has the following beneficial effects:

(1) The fatty alcohol polyether amine polyether prepared by the disclosure introduces a tertiary amine group based on an alcohol polyether, the advantages of the fatty alcohol polyether amine are remained, the water solubility and permeability are added, and the fatty alcohol polyether amine polyether can be used for preparing quaternary ammonium salt intermediate products and various industrial solvents. Compared with fatty alcohol polyether, the fatty alcohol polyether amine polyether prepared by the disclosure has a wider application range in the industrial field, can be used as a sterilizing agent, a disinfector, a softening agent, an antistatic agent, a demulsifier and drilling fluid, and has better performance.

(2) Compared with traditional polyether amine such as ethylene glycol polyether amine, methyl alcohol polyether amine and trimethylolpropane polyether amine, the fatty alcohol polyether amine polyether prepared by the disclosure has the advantages that raw materials are natural and may be easily acquired, non-renewable resources such as petroleum and coal cannot be consumed, and additionally, the raw material cost is low. Compared with traditional polyether amine, the fatty alcohol polyether amine polyether prepared by the disclosure has rich foam, strong dirt-removing power, emulsifying ability and high solubility, and has the advantages of safety, nontoxicity, no skin stimulation, biodegradability, high compatibility, green and environmental-friendly effects, etc., and conforms to the requirements of an environmental-friendly material.

(3) The fatty alcohol polyether amine polyether prepared by the disclosure has a high total amine value, a high conversion rate, high tertiary amine selectivity and good product quality, wherein the tertiary amine rate is higher than 98.0%, and is as high as 99.5%. Additionally, the raw materials are natural and may be easily acquired. A preparation process is simple, and is suitable for large-scale production and application.

The disclosure will be further illustrated in detail hereafter in combination with the detailed description.

**Detailed Description of The Embodiments**

All of raw materials, reagents or apparatuses used in embodiments below, unless otherwise specified, may be acquired from a conventional business approach or may be acquired through an existing method.

In the embodiments below, a double metal cyanide complex catalyst (DMC) was purchased from Shanghai Chic New Material Co. Ltd, a model was Chic double metal cyanide complex catalyst (DMC), and a main component was a magnesium-aluminum compound.

In the embodiments below, a method for determining a hydroxyl value of a fatty alcohol polyether synthesized in the first step was performed according to GB/T 12008.3-2009, and the molecular weight was worked out. According to a method for determining a total amine value 1 of a fatty alcohol polyether amine synthesized in the second step, a product was titrated by a 0.5 mol/L hydrochloric acid solution, the total amine value of the product might be calculated through the consumed hydrochloric acid volume. According to a method for determining a primary amine value, salicylaldehyde took a reaction with primary amine, then, titration was performed by using hydrochloric acid, and a primary amine value in a sample was calculated by subtracting the secondary amine value and the tertiary amine value from the total amine value. A total amine value 2 and a tertiary amine value of the fatty alcohol polyether amine polyether synthesized in the third step were determined. A method for determining the tertiary amine value was an acetic anhydride-perchloric acid method, and an amination conversion rate and a primary amine rate were calculated according to Formula (1), Formula (2) and Formula (3):

$$\text{the amination conversion rate=total amine value 1/hydroxyl value} \times 100\% \quad (1);$$

$$\text{the primary amine rate=primary amine value/total amine value } 1 \times 100 \quad (2);$$

and

$$\text{the tertiary amine=tertiary amine value/total amine value } 2 \times 100\% \quad (3).$$

Embodiment 1

A preparation method of a fatty alcohol polyether amine polyether included the following steps:

(1) Preparation of a fatty alcohol polyether: 242 g of a $C_{16}$ palmityl alcohol was added into an agitating reaction kettle, nitrogen gas replacement was performed for three times, agitation was started, at the same time, a temperature was raised to 115°C, dehydration was performed for 1 h, a temperature was lowered to 90°C, 3.8 g of a double metal cyanide complex catalyst (DMC) was added, a temperature was raised to 130°C, propylene oxide was slowly introduced, and an adduct number of the propylene oxide was 4, 232 g, and a polymerization reaction was performed under the conditions of a pressure being 0.20 MPa and a temperature being 145°C. After the material feeding was finished, a curing temperature was 115°C, the reaction was ended when a pressure in the reaction kettle did not drop within 30 min, degassing was performed, and discharging was performed to obtain a fatty alcohol polyether crude product. Then, posttreatment was performed, phosphoric acid was added for neutralization, and a pH value was adjusted to 4.5 to 5. Next, an adsorbent was added for adsorption, then, reduced pressure distillation dehydration was performed, and the fatty alcohol polyether was obtained after filtration. Through chemical analysis, a hydroxyl value and the molecular weight were determined.

(2) Synthesis of a fatty alcohol polyether amine: about 474 g of the obtained fatty alcohol polyether and 71 g of a palladium on charcoal catalyst were added into an autoclave, nitrogen gas replacement was performed for three times, the autoclave was connected to a liquid ammonia tank, a cooling apparatus was started, 170 g of liquid ammonia was slowly pressed into the autoclave, and the autoclave was filled with a certain volume of hydrogen gas to acquire a 2.0 MPa initial pressure. Agitation was started, a temperature was raised to 180°C, an amination reaction was performed at a 12 MPa in-autoclave pressure, and the temperature was preserved for 5 h. After the reaction was finished, the temperature was lowered, the pressure was relieved, unreacted ammonia gas and hydrogen gas were absorbed by water, and discharging was performed to collect a fatty alcohol polyether amine crude product. Posttreatment was performed, dehydration, deamination and filtration were performed to obtain a fatty alcohol polyether amine product. A total amine value 1 and a primary amine value were determined through chemical analysis, an amination conversion ratemay reach 99%, and a primary amine rate may reach 98.0%.

(3) Synthesis of a fatty alcohol polyether amine polyether: about 470 g of the prepared fatty alcohol polyether amine was added into an agitating reaction kettle, nitrogen gas replacement was performed for three times, agitation was started, at the same time, a temperature was raised to 110°C to 115°C, dehydration was performed for 1 h, a temperature was lowered to 90°C, 5.9 g of potassium hydroxide was added, a temperature was raised to 150°C, ethylene oxide was slowly introduced, an adduct number of the ethylene oxide was 6, 264 g, and a polymerization reaction was performed under the conditions of a pressure being 0.30 MPa and a temperature being 160°C. After the material feeding was finished, and a curing temperature was 115°C, the reaction was ended when a pressure in the reaction kettle did not drop within 30 min, degassing was performed, and discharging was performed to obtain a fatty alcohol polyether amine polyether crude product. Then, posttreatment was performed to obtain a fatty alcohol polyether amine polyether finished product. Through chemical analysis, a total amine value 2 and a tertiary amine value were determined, and a tertiary amine rate may reach 99.5%.

A chemical equation in this embodiment was as shown by Formula I.

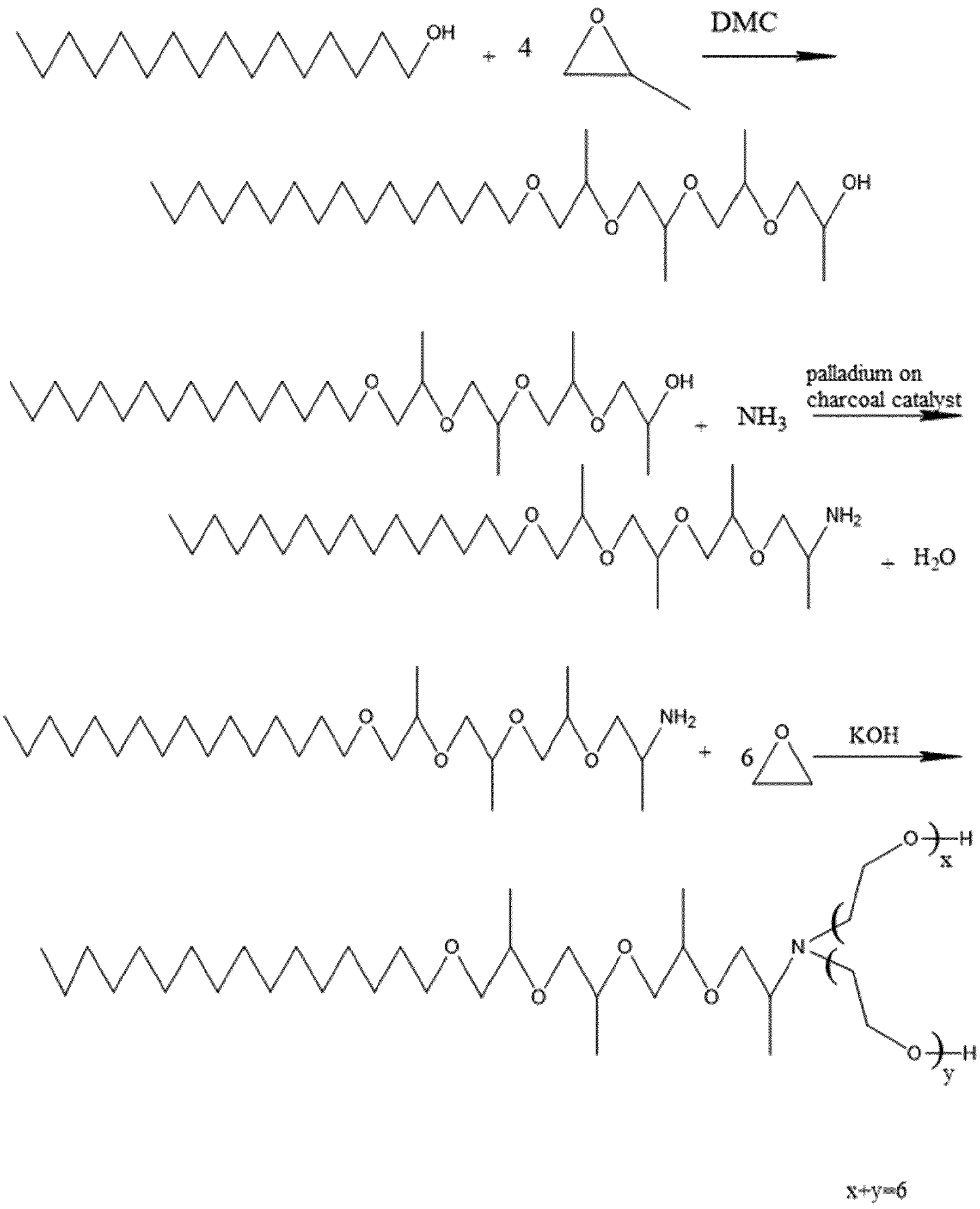


Formula I

Embodiment 2

A preparation method of a fatty alcohol polyether amine polyether included the following steps:

(1) Preparation of a fatty alcohol polyether: 256 g of a $C_{18}$ stearyl alcohol was added into an agitating reaction kettle, nitrogen gas replacement was performed for three times, agitation was started, at the same time, a temperature was raised to 115°C, dehydration was performed for 1 h, a temperature was lowered to 90°C, 4.4 g of a sodium hydroxide catalyst was added, a temperature was raised to 130°C, propylene oxide was slowly introduced, and an adduct number of the propylene oxide was 5, 290 g, and a polymerization reaction was performed under the conditions of a pressure being 0.20 MPa and a temperature being 135°C. After the material feeding was finished, a curing temperature was 115°C, the reaction was ended when a pressure in the reaction kettle did not drop within 30 min, degassing was performed, and discharging was performed to obtain a fatty alcohol polyether crude product. Then, posttreatment was performed, phosphoric acid was added for neutralization, and a pH value was adjusted to 4.5 to 5. Next, an adsorbent was added for adsorption, then, reduced pressure distillation dehydration was performed,

and the fatty alcohol polyether was obtained after filtration. Through chemical analysis, a hydroxyl value and the molecular weight were determined.

(2) Synthesis of a fatty alcohol polyether amine: about 546 g of the obtained fatty alcohol polyether and 65.5 g of a palladium on charcoal catalyst were added into an autoclave, nitrogen gas replacement was performed for three times, the autoclave was connected to a liquid ammonia tank, a cooling apparatus was started, 204 g of liquid ammonia was slowly pressed into the autoclave, and the autoclave was filled with a certain volume of hydrogen gas to acquire a 1.8 MPa initial pressure. Agitation was started, a temperature was raised to 170°C, an amination reaction was performed at a 11 MPa in-autoclave pressure, and the temperature was preserved for 6 h. After the reaction was finished, the temperature was lowered, the pressure was relieved, unreacted ammonia gas and hydrogen gas were absorbed by water, and discharging was performed to collect a fatty alcohol polyether amine crude product. Posttreatment was performed, dehydration, deamination and filtration were performed to obtain a fatty alcohol polyether amine product. A total amine value 1 and a primary amine value were determined through chemical analysis, an amination conversion ratemay reach 98%, and a primary amine rate may reach 97.5%.

(3) Synthesis of a fatty alcohol polyether amine polyether: about 540 g of the prepared fatty alcohol polyether amine was added into an agitating reaction kettle, nitrogen gas replacement was performed for three times, agitation was started, at the same time, a temperature was raised to 110°C to 115°C, dehydration was performed for 1 h, a temperature was lowered to 90°C, 4.6 g of sodium hydroxide was added, a temperature was raised to 150°C, ethylene oxide was slowly introduced, an adduct number of the ethylene oxide was 5, 220 g, and a polymerization reaction was performed under the conditions of a pressure being 0.30 MPa and a temperature being 160°C. After the material feeding was finished, and a curing temperature was 115°C, the reaction was ended when a pressure in the reaction kettle did not drop within 30 min, degassing was performed, and discharging was performed to obtain a fatty alcohol polyether amine polyether crude product. Then, posttreatment was performed to obtain a fatty alcohol polyether amine polyether finished product. Through chemical analysis, a total amine value 2 and a tertiary amine value were determined, and a tertiary amine rate may reach 99.0%.

A chemical equation in this embodiment was as shown by Formula II.

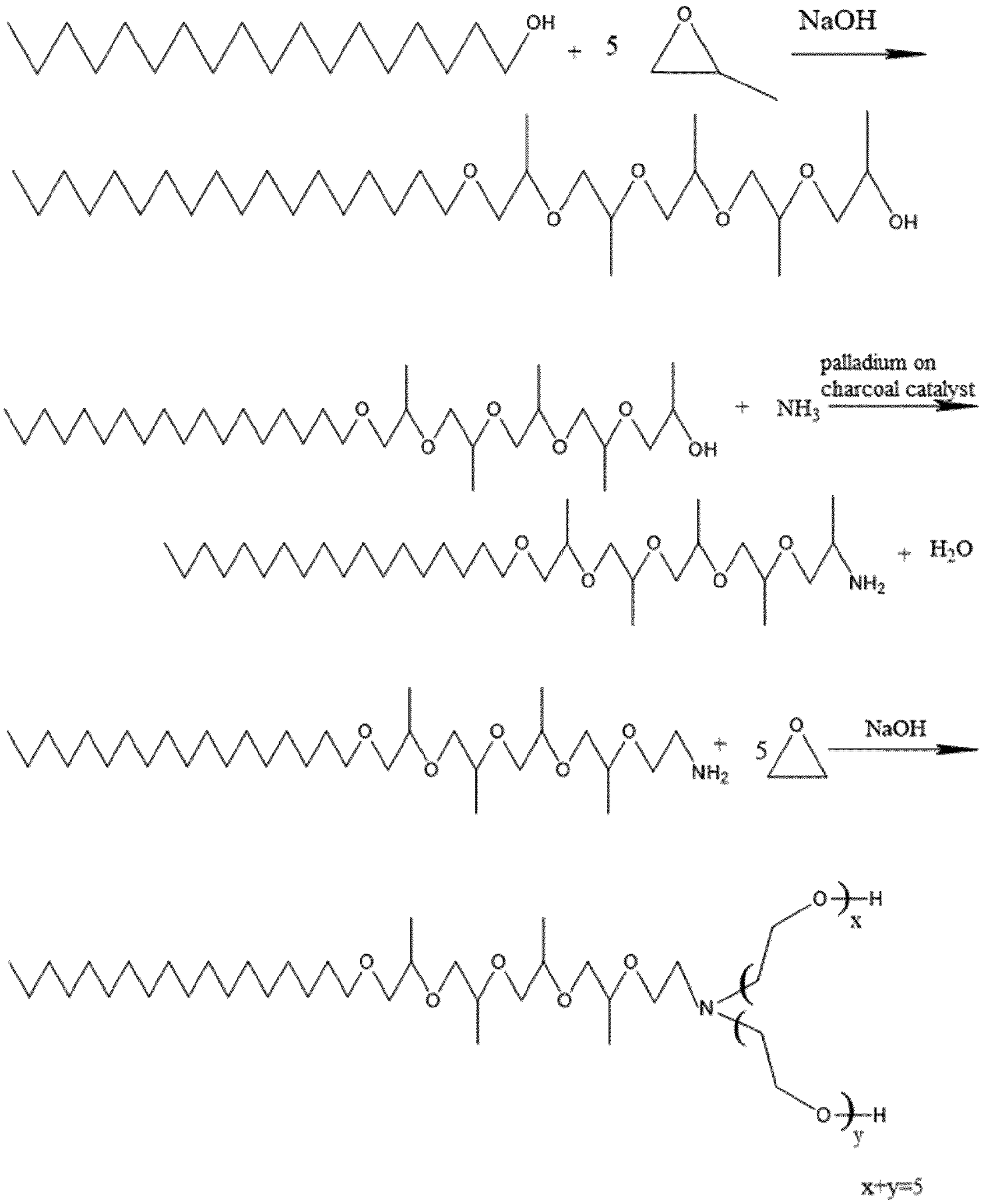


Formula II

Embodiment 3

A preparation method of a fatty alcohol polyether amine polyether included the following steps:

(1) Preparation of a fatty alcohol polyether: 228 g of a $C_{14}$ myristyl alcohol was added into an agitating reaction kettle, nitrogen gas replacement was performed for three times, agitation was started, at the same time, a temperature was raised to 115°C, dehydration was performed for 1 h, a temperature was lowered to 90°C, 2.8 g of a potassium hydroxide catalyst was added, a temperature was raised to 130°C, propylene oxide was slowly introduced, and an adduct number of the propylene oxide was 3, 174 g, and a polymerization reaction was performed under the conditions of a pressure being 0.20 MPa and a temperature being 140°C. After the material feeding was finished, a curing temperature was 115°C, the reaction was ended when a pressure in the reaction kettle did not drop within 30 min, degassing was performed, and discharging was performed to obtain a fatty alcohol polyether crude product. Then,

posttreatment was performed, phosphoric acid was added for neutralization, and a pH value was adjusted to 4.5 to 5. Next, an adsorbent was added for adsorption, then, reduced pressure distillation dehydration was performed, and the fatty alcohol polyether was obtained after filtration. Through chemical analysis, a hydroxyl value and the molecular weight were determined.

(2) Synthesis of a fatty alcohol polyether amine: about 402 g of the obtained fatty alcohol polyether and 40 g of a palladium on charcoal catalyst were added into an autoclave, nitrogen gas replacement was performed for three times, the autoclave was connected to a liquid ammonia tank, a cooling apparatus was started, 102 g of liquid ammonia was slowly pressed into the autoclave, and the autoclave was filled with a certain volume of hydrogen gas to acquire a 2.2 MPa initial pressure. Agitation was started, a temperature was raised to 160°C, an amination reaction was performed at a 9 MPa in-autoclave pressure, and the temperature was preserved for 3 h. After the reaction was finished, the temperature was lowered, the pressure was relieved, unreacted ammonia gas and hydrogen gas were absorbed by water, and discharging was performed to collect a fatty alcohol polyether amine crude product. Posttreatment was performed, dehydration, deamination and filtration were performed to obtain a fatty alcohol polyether amine product. A total amine value 1 and a primary amine value were determined through chemical analysis, an amination conversion rate may reach 95%, and a primary amine rate may reach 97%.

(3) Synthesis of a fatty alcohol polyether amine polyether: about 400 g of the prepared fatty alcohol polyether amine was added into an agitating reaction kettle, nitrogen gas replacement was performed for three times, agitation was started, at the same time, a temperature was raised to 110°C to 115°C, dehydration was performed for 1 h, a temperature was lowered to 90°C, 4.3 g of sodium hydroxide was added, a temperature was raised to 150°C, ethylene oxide was slowly introduced, an adduct number of the ethylene oxide was 7, 308 g, and a polymerization reaction was performed under the conditions of a pressure being 0.30 MPa and a temperature being 155°C. After the material feeding was finished, and a curing temperature was 115°C, the reaction was ended when a pressure in the reaction kettle did not drop within 30 min, degassing was performed, and discharging was performed to obtain a fatty alcohol polyether amine polyether crude product. Then, posttreatment was performed to obtain a fatty alcohol polyether amine polyether finished product. Through chemical analysis, a total amine value 2 and a tertiary amine value were determined, and a tertiary amine rate may reach 98.0%.

A chemical equation in this embodiment was as shown by Formula III.

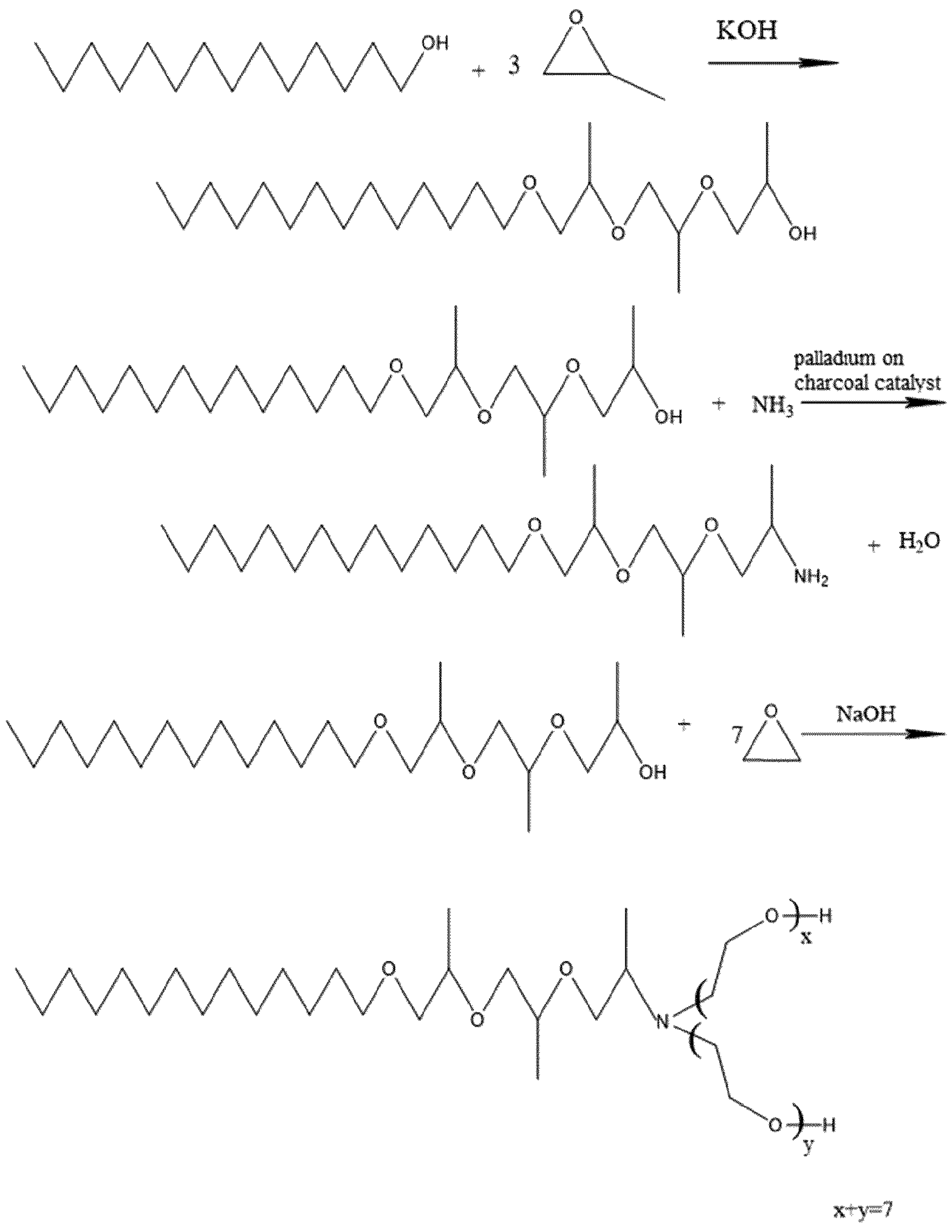


Formula III

Embodiment 4

A preparation method of a fatty alcohol polyether amine polyether included the following steps:

(1) Preparation of a fatty alcohol polyether: 214 g of a $C_{12}$ laurinol was added into an agitating reaction kettle, nitrogen gas replacement was performed for three times, agitation was started, at the same time, a temperature was raised to 115°C, dehydration was performed for 1 h, a temperature was lowered to 90°C, 3.9 g of a double metal cyanide complex catalyst (DMC) was added, a temperature was raised to 130°C, propylene oxide was slowly introduced, and an adduct number of the propylene oxide was 6, 348 g, and a polymerization reaction was performed under the conditions of a pressure being 0.20 MPa and a temperature being 145°C. After the material feeding was finished, a curing temperature was 115°C, the reaction was ended when a pressure in the reaction kettle did not drop within 30 min, degassing was performed, and discharging was performed to obtain a fatty alcohol polyether crude product. Then, posttreatment was performed, phosphoric acid was added for neutralization, and a pH value was adjusted to 4.5 to 5. Next, an adsorbent was added for adsorption, then, reduced pressure distillation dehydration was performed, and the fatty alcohol polyether was obtained after filtration. Through chemical analysis, a hydroxyl value and the molecular weight were determined.

(2) Synthesis of a fatty alcohol polyether amine: about 562 g of the obtained fatty alcohol polyether and 73 g of a palladium on charcoal catalyst were added into an autoclave, nitrogen gas replacement was performed for three times, the autoclave was connected to a liquid ammonia tank, a cooling apparatus was started, 136 g of liquid ammonia was slowly pressed into the autoclave, and the autoclave was filled with a certain volume of hydrogen gas to acquire a 2.0 MPa initial pressure. Agitation was started, a temperature was raised to 170°C, an amination reaction was performed at a 10 MPa in-autoclave pressure, and the temperature was preserved for 5 h. After the reaction was finished, the temperature was lowered, the pressure was relieved, unreacted ammonia gas and hydrogen gas were absorbed by water, and discharging was performed to collect a fatty alcohol polyether amine crude product. Posttreatment was performed, dehydration, deamination and filtration were performed to obtain a fatty alcohol polyether amine product. A total amine value 1 and a primary amine value were determined through chemical analysis, an amination conversion rate may reach 98%, and a primary amine rate may reach 98%.

(3) Synthesis of a fatty alcohol polyether amine polyether: about 560 g of the prepared fatty alcohol polyether amine was added into an agitating reaction kettle, nitrogen gas replacement was performed for three times, agitation was started, at the same time, a temperature was raised to 110°C to 115°C, dehydration was performed for 1 h, a temperature was lowered to 90°C, 7.3 g of potassium hydroxide was added, a temperature was raised to 150°C, ethylene oxide was slowly introduced, an adduct number of the ethylene oxide was 8, 352 g, and a polymerization reaction was performed under the conditions of a pressure being 0.30 MPa and a temperature being 160°C. After the material feeding was finished, and a curing temperature was 115°C, the reaction was ended when a pressure in the reaction kettle did not drop within 30 min, degassing was performed, and discharging was performed to obtain a fatty alcohol polyether amine polyether crude product. Then, posttreatment was performed to obtain a fatty alcohol polyether amine polyether finished product. Through chemical analysis, a total amine value 2 and a tertiary amine value were determined, and a tertiary amine rate may reach 99.0%.

A chemical equation in this embodiment was as shown by Formula IV.

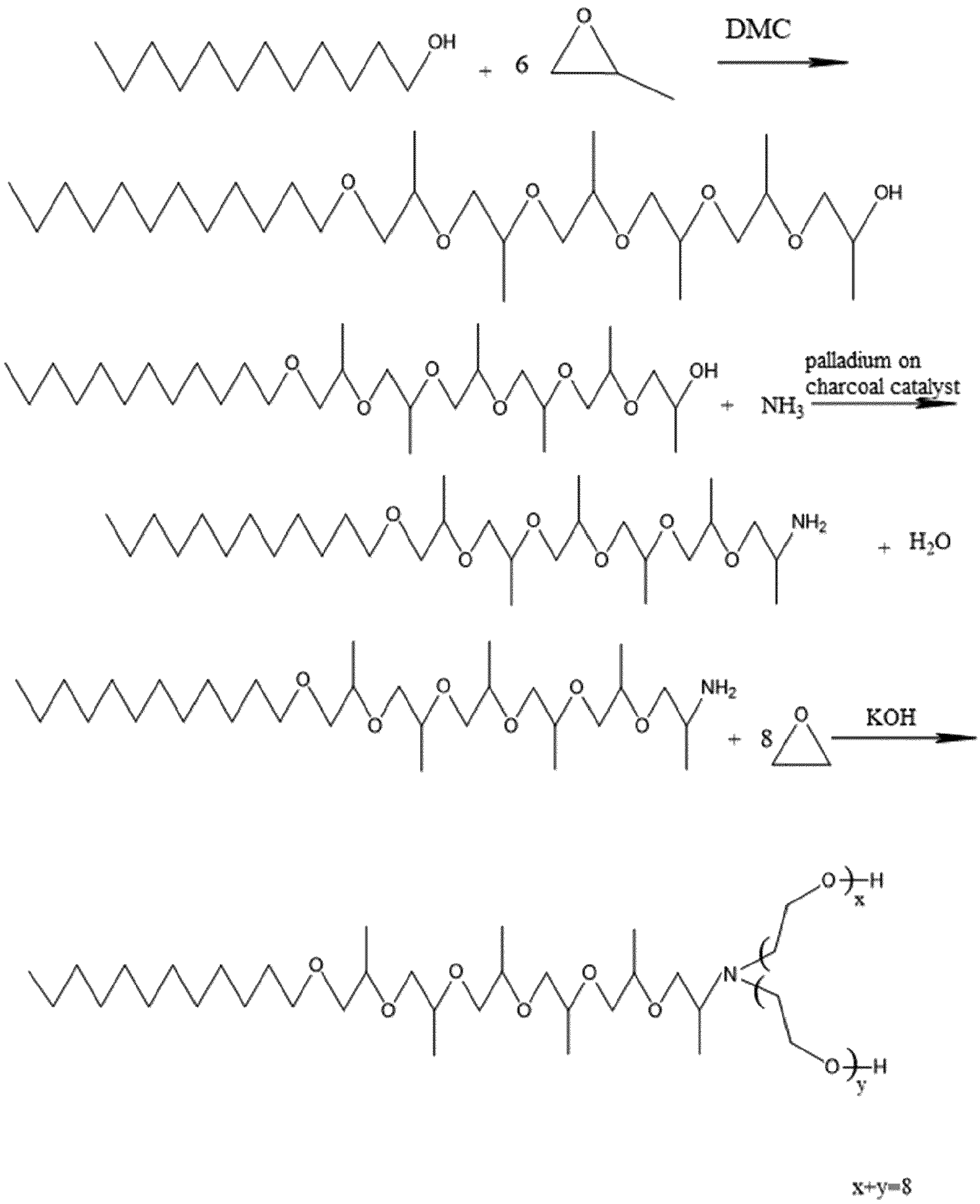


Formula IV

From the above embodiments, the fatty alcohol polyether amine polyether prepared by the disclosure has a high total amine value, high conversion rate, high tertiary amine selectivity and high product quality, and a tertiary amine rate is higher than 98.0%, and is as high as 99.5%. However, it needs to be noted that the prepared fatty alcohol polyether amine polyether is not limited to the four types given in the embodiments, proper first epoxy compound and second epoxy compound can be selected according to specific requirements, the types are many, and the requirements of various industries on the fatty alcohol polyether amine polyether can be met. Further, through comparison on Embodiments 1, 2, 3 and 4, it can be known that an optimum synthesis process of the fatty alcohol polyether amine polyether is as follows: in the first step polymerization reaction, the catalyst is a double metal cyanide complex catalyst (DMC); in the second step amination reaction, the most proper reaction temperature is about 180°C, the reaction pressure is about 12 MPa, and the reaction time is about 5 h; and in the third step polymerization reaction, the selected catalyst is potassium hydroxide, the polymerization temperature is 160°C. The fatty alcohol polyether amine polyether prepared under such conditions have the higher total amine value, conversion rate, tertiary amine selectivity and product quality.

Based on the above, the fatty alcohol polyether amine polyether prepared by the disclosure has high conversion rate, high tertiary amine selectivity, safety, nontoxicity, no skin stimulation, high compatibility, etc., and conforms to the development requirements of environmental-friendly materials, so that the obtained fatty alcohol polyether amine polyether has higher reaction activity and wider purposes.

The foregoing embodiments are only several implementations of the disclosure. Their descriptions are concrete and detailed, but they shall not be understood as the limitation to the patent scope of the disclosure. It should be pointed out that those of ordinary skill in the art can also make various modifications and improvements without departing from the spirit of the disclosure, and these modifications and improvements are also included within the protection scope of the disclosure. Therefore, the protection scope of the disclosure shall be defined by the claims appended hereto.

## Claims

1. A preparation method of a fatty alcohol polyether amine polyether, comprising the following steps: using a fatty alcohol as an initiator, and adding a first epoxy compound for a polymerization reaction to obtain a fatty alcohol polyether; then, taking a hydroamination reaction between the fatty alcohol polyether and liquid ammonia to obtain a fatty alcohol polyether amine; and finally, taking a polymerization reaction between the fatty alcohol polyether amine and a second epoxy compound to obtain the fatty alcohol polyether amine polyether.

2. The preparation method according to claim 1, wherein the first epoxy compound and the second epoxy compound are respectively and independently selected from at least one of ethylene oxide, propylene oxide, ethylene oxide/propylene oxide random copolymers, or ethylene oxide/propylene oxide segmented copolymers.

3. The preparation method according to claim 1, wherein the fatty alcohol is a $C_{12}$-$C_{18}$ fatty alcohol, and the preparation method comprises the following steps:

   (1) using the $C_{12}$-$C_{18}$ fatty alcohol as an initiator, and adding the first epoxy compound to take a polymerization reaction at 135°C to 145°C under the effect of a first catalyst to obtain a fatty alcohol polyether;
   (2) adding the fatty alcohol polyether obtained in step (1), liquid ammonia and hydrogen gas into a reaction kettle to take a hydroamination reaction at 160°C to 180°C under the effect of a second catalyst to obtain fatty alcohol polyether amine; and
   (3) introducing the second epoxy compound into the fatty alcohol polyether amine obtained in step (2) to take a polymerization reaction at 155°C to 160°C under the effect of a third catalyst to obtain the fatty alcohol polyether amine polyether, a tertiary amine rate of the prepared fatty alcohol polyether amine polyether is higher than 98.0%.

4. The preparation method according to claim 3, wherein in step (1), a mole ratio of the $C_{12}$-$C_{18}$ fatty alcohol to the first epoxy compound is 1:3-1:6, and preferably, a mole ratio of the $C_{12}$-$C_{18}$ fatty alcohol to the first epoxy compound is 1:3-1:5.

5. The preparation method according to claim 3, wherein in step (1), the first catalyst is at least one of potassium hydroxide, sodium hydroxide or a double metal cyanide complex catalyst (DMC).

6. The preparation method according to claim 3, wherein in step (2), a mole ratio of the fatty alcohol polyether to the liquid ammonia is 1:5-1:15, and a mole ratio of the fatty alcohol polyether to the hydrogen gas is 1:2-1:8.

7. The preparation method according to claim 3, wherein in step (2), the second catalyst is a palladium on charcoal catalyst, and an addition amount of the palladium on charcoal catalyst is 10% to 20% of the mass of the fatty alcohol polyether.

8. The preparation method according to claim 3, wherein in step (3), a mole ratio of the fatty alcohol polyether amine to the second epoxy compound is 1:5-1:8, and the third catalyst comprises at least one of potassium hydroxide or sodium hydroxide.

9. The preparation method according to claim 2, wherein the fatty alcohol is a $C_{12}$-$C_{18}$ fatty alcohol, and the preparation method comprises the following steps:

   (1) using the $C_{12}$-$C_{18}$ fatty alcohol as an initiator, and adding the first epoxy compound to take a polymerization

reaction at 135°C to 145°C under the effect of a first catalyst to obtain a fatty alcohol polyether;
(2) adding the fatty alcohol polyether obtained in step (1), liquid ammonia and hydrogen gas into a reaction kettle to take a hydroamination reaction at 160°C to 180°C under the effect of a second catalyst to obtain fatty alcohol polyether amine; and
(3) introducing the second epoxy compound into the fatty alcohol polyether amine obtained in step (2) to take a polymerization reaction at 155°C to 160°C under the effect of a third catalyst to obtain the fatty alcohol polyether amine polyether, a tertiary amine rate of the prepared fatty alcohol polyether amine polyether is higher than 98.0%.

**10.** The preparation method according to claim 9, wherein in step (1), a mole ratio of the $C_{12}$-$C_{18}$ fatty alcohol to the first epoxy compound is 1:3-1:6, and preferably, a mole ratio of the $C_{12}$-$C_{18}$ fatty alcohol to the first epoxy compound is 1:3-1:5.

**11.** The preparation method according to claim 9, wherein in step (1), the first catalyst is at least one of potassium hydroxide, sodium hydroxide or a double metal cyanide complex catalyst (DMC).

**12.** The preparation method according to claim 9, wherein in step (2), a mole ratio of the fatty alcohol polyether to the liquid ammonia is 1:5-1:15, and a mole ratio of the fatty alcohol polyether to the hydrogen gas is 1:2-1:8.

**13.** The preparation method according to claim 9, wherein in step (2), the second catalyst is a palladium on charcoal catalyst, and an addition amount of the palladium on charcoal catalyst is 10% to 20% of the mass of the fatty alcohol polyether.

**14.** The preparation method according to claim 9, wherein in step (3), a mole ratio of the fatty alcohol polyether amine to the second epoxy compound is 1:5-1:8, and the third catalyst comprises at least one of potassium hydroxide or sodium hydroxide.

**15.** A aurfactant, which includes the fatty alcohol polyether amine polyether by the preparation method according to claim 1.

Europäisches Patentamt
European Patent Office
Office européen des brevets

# EUROPEAN SEARCH REPORT

Application Number
EP 24 17 3069

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | CN 116 715 840 A (ZHEJIANG HUANGMA TECH CO LTD; ZHEJIANG LYUKEAN CHEMICAL CO LTD ET AL.) 8 September 2023 (2023-09-08)<br>* the whole document *<br>----- | 1-15 | INV.<br>C08G65/26<br>C08G65/325<br>C11D1/72 |
| A | WO 00/61708 A1 (BASF AG [DE]; OPPENLAENDER KNUT [DE] ET AL.)<br>19 October 2000 (2000-10-19)<br>* abstract;<br>claim 1; example 1 *<br>----- | 1-15 | |
| A | US 6 372 000 B1 (DEROSA THOMAS F [US] ET AL) 16 April 2002 (2002-04-16)<br>* examples *<br>----- | 1-15 | |

TECHNICAL FIELDS SEARCHED (IPC)

C08G
C11D

The present search report has been drawn up for all claims

| Place of search | Date of completion of the search | Examiner |
|---|---|---|
| The Hague | 14 October 2024 | Hoffmann, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1

EPO FORM 1503 03.82 (P04C01)

# ANNEX TO THE EUROPEAN SEARCH REPORT ON EUROPEAN PATENT APPLICATION NO.

EP 24 17 3069

This annex lists the patent family members relating to the patent documents cited in the above-mentioned European search report. The members are as contained in the European Patent Office EDP file on
The European Patent Office is in no way liable for these particulars which are merely given for the purpose of information.

14-10-2024

| Patent document cited in search report | | Publication date | Patent family member(s) | | | Publication date |
|---|---|---|---|---|---|---|
| CN 116715840 | A | 08-09-2023 | NONE | | | |
| WO 0061708 | A1 | 19-10-2000 | AT | E243249 | T1 | 15-07-2003 |
| | | | AU | 774548 | B2 | 01-07-2004 |
| | | | BR | 0009749 | A | 08-01-2002 |
| | | | CA | 2369752 | A1 | 19-10-2000 |
| | | | CZ | 20013563 | A3 | 17-04-2002 |
| | | | DE | 19916512 | A1 | 19-10-2000 |
| | | | DK | 1177270 | T3 | 14-07-2003 |
| | | | EE | 200100531 | A | 16-12-2002 |
| | | | EP | 1177270 | A1 | 06-02-2002 |
| | | | ES | 2202126 | T3 | 01-04-2004 |
| | | | JP | 2002542336 | A | 10-12-2002 |
| | | | KR | 20020010600 | A | 04-02-2002 |
| | | | MX | 220319 | B | 10-05-2004 |
| | | | NO | 320082 | B1 | 17-10-2005 |
| | | | NZ | 514735 | A | 31-01-2003 |
| | | | PL | 351254 | A1 | 07-04-2003 |
| | | | PT | 1177270 | E | 28-11-2003 |
| | | | SK | 13612001 | A3 | 04-06-2002 |
| | | | TR | 200102942 | T2 | 22-04-2002 |
| | | | US | 6548461 | B1 | 15-04-2003 |
| | | | WO | 0061708 | A1 | 19-10-2000 |
| US 6372000 | B1 | 16-04-2002 | AU | 5439001 | A | 18-06-2001 |
| | | | CA | 2393262 | A1 | 14-06-2001 |
| | | | JP | 4729221 | B2 | 20-07-2011 |
| | | | JP | 2003517510 | A | 27-05-2003 |
| | | | KR | 20020071871 | A | 13-09-2002 |
| | | | US | 6372000 | B1 | 16-04-2002 |
| | | | WO | 0142188 | A2 | 14-06-2001 |

EPO FORM P0459

For more details about this annex : see Official Journal of the European Patent Office, No. 12/82